# EUROPÄISCHE PATENTSCHRIFT

(11) **EP 2 140 169 B1**
(45) Veröffentlichungstag und Bekanntmachung des Hinweises auf die Patenterteilung: **25.08.2010**
(21) Anmeldenummer: 08718004.8
(22) Anmeldetag: 19.03.2008
(51) Int. Cl.: F16F 15/26

(54) **VERFAHREN ZUR HERSTELLUNG EINER GESENKGESCHMIEDETEN AUSGLEICHSWELLE**
METHOD FOR THE PRODUCTION OF A DROP-FORGED BALANCING SHAFT
PROCEDE DE FABRICATION PAR ESTAMPAGE D'UN ARBRE D'EQUILIBRAGE

(30) Priorität: 21.04.2007 DE 102007019008
(43) Veröffentlichungstag der Anmeldung: 06.01.2010
(73) Patentinhaber: Schaeffler Technologies GmbH & Co. KG, 91074 Herzogenaurach (DE)
(72) Erfinder: TISCH, Siegfried, 70839 Gerlingen (DE); WEIGAND, Klaus, 72622 Nürtingen (DE)
(86) Internationale Anmeldenummer: PCT/EP2008/053278
(87) Internationale Veröffentlichungsnummer: WO 2008/128834

(56) Entgegenhaltungen:
- WO-A-2004/099648
- DE-A1- 4 412 476
- DE-A1- 10 115 536
- DE-A1- 10 347 348
- DE-A1-102004 058 620
- GB-A- 2 051 634
- US-B1- 6 450 890

## Beschreibung

Die Erfindung betrifft ein Verfahren zur Herstellung einer gesenkgeschmiedeten Ausgleichswelle für ein Massenausgleichsgetriebe einer Brennkraftmaschine. Die Ausgleichswelle weist eine durch ihre Rotationsachse und einen exzentrischen Massenschwerpunkt aufgespannte Unwuchtebene und zumindest einen Lagerzapfen auf, dessen Außenmantelfläche als Laufbahn für ein die Ausgleichswelle in der Brennkraftmaschine lagerndes Wälzlager dient.

Dokument DE 10 115 536 A1 zeigt eine Ausgleichswelle für eine Brennkraftmaschine gemäß dem Oberbegriff des Anspruchs 1.

### Hintergrsund der Erfindung

Die in Brennkraftmaschinen bekanntermaßen zur teilweisen oder vollständigen Kompensation von freien Massenkräften und/oder -momenten eingesetzten Ausgleichswellen werden üblicherweise aus gegossenen oder geschmiedeten Rohlingen hergestellt. Als Lagerungsarten der Ausgleichswelle in der Brennkraftmaschine sind neben einer Gleitlagerung ebenfalls die Möglichkeiten einer Wälzlagerung oder einer kombinierten Gleit-Wälzlagerung bekannt, wobei die Laufbahn für die Wälzkörper entweder durch einen auf den Lagerzapfen aufgezogenen Innenring des Wälzlagers oder, wie bei der hier vorliegenden Erfindung vorgesehen, unmittelbar durch die Außenmantelfläche des Lagerzapfens gebildet ist.

Die letztgenannte Lagerungsart kann jedoch im Falle einer gesenkgeschmiedeten Ausgleichswelle deswegen nachteilig sein, als die höchstbelastete und von Wälzkörpern permanent überrollte Stelle des Lagerzapfens in der Unwuchtebene auf Seiten des Massenschwerpunkts liegt und die Unwuchtebene, wie bislang üblich, mit der Gesenkteilung des Schmiedegesenks zusammenfällt. Obwohl eine derartige Gesenkteilung aufgrund der zu ihrer Unwuchtebene im wesentlichen symmetrischen Ausgleichswelle nicht nur im Hinblick auf den dann vergleichsweise geringen Herstellaufwand für die Gesenkhälften, sondern auch im Hinblick auf die beim Schmiedeprozess abzustützenden Werkzeugkräfte erhebliche Vorteile bietet, kann es zu einem nicht beanspruchungsgerechten Zusammenfluss der Werkstofffasern der Ausgleichswelle an der höchstbelasteten Stelle des Lagerzapfens kommen. Aufgrund der durch die Gesenkteilung unterbrochenen und sich dort nicht homogen verbindenden Fasern können im Werkstoff eingeschlossene Verunreinigungen während des Schmiedeprozesses der Ausgleichswelle und dem damit einhergehenden Werkstofffließen im Bereich der Lastzone von innen nach außen an die Oberfläche des Lagerzapfens transportiert werden. Diese Verunreinigungen können dann Ausgangspunkt für vorzeitige Ermüdungsschäden an der höchstbelasteten Stelle der Laufbahn für das Wälzlager sein.

### Aufgabe der Erfindung

Der vorliegenden Erfindung liegt daher die Aufgabe zugrunde, den Schmiedeprozess einer Ausgleichswelle der eingangs genannten Art so fortzubilden, dass der genannte Nachteil mit einfachen Mitteln beseitigt ist. Im Ergebnis soll demnach bereits der Schmiederohling die werkstoffliche Grundlage für die der Lebensdaueranforderung der Brennkraftmaschine entsprechende Betriebssicherheit der Ausgleichswelle bilden.

### Zusammenfassung der Erfindung

Erfindungsgemäß wird diese Aufgabe durch die Merkmale des kennzeichnenden Teils des Anspruchs 1 gelöst, während vorteilhafte Weiterbildungen und Ausgestaltungen der Erfindung den Unteransprüchen entnehmbar sind. Demnach ist es vorgesehen, dass die Ausgleichswelle in einem Gesenk mit einer in Richtung der Rotationsachse verlaufenden und gegenüber der Unwuchtebene verdrehten Gesenkteilung geschmiedet wird. Wie es auch anhand eines später erläuterten Ausführungsbeispiels der Erfindung illustriert ist, führt die erfindungsgemäße Verdrehung der Gesenkteilung zu einem Werkstoffgefüge des Lagerzapfens, der im Bereich der hochbelasteten Unwuchtebene einen beanspruchungsgerechten, d.h. ununterbrochenen und homogenen Faserverlauf zugunsten einer zumindest weitgehend von Verunreinigungen freien, lebensdauerfesten Laufbahn für das die Ausgleichswelle lagernde Wälzlager aufweist.

In einer bevorzugten Fortbildung der Erfindung ist es vorgesehen, dass die Gesenkteilung im wesentlichen orthogonal zur Unwuchtebene verläuft. Neben einer vorteilhaft symmetrischen Kraftbelastung der Gesenkhälften in sich führt diese Orientierung der Gesenkteilung vor allem dazu, dass der inhomogene Faserverlauf zu beiden Seiten der Unwuchtebene symmetrisch verläuft. Dies führt im Bereich der Laufbahn zu beidseitig der Unwuchtebene größtmöglichen Umfangswinkeln am Lagerzapfen mit homogenem Faserverlauf. Unter dem Begriff "im wesentlichen orthogonal" sind aber auch Winkel zwischen der Unwuchtebene und der Gesenkteilung zu verstehen, die von 90° durch einen über die Schwankungsbreite üblicher Allgemeintoleranzen hinausgehenden Wert abweichen, solange sich durch den Schmiedeprozess ein im Sinne der Erfindung ausreichend beanspruchungsgerechter Faserverlauf des Lagerzapfens im Bereich der Unwuchtebene einstellt.

Schließlich ist eine in Richtung der Rotationsachse gekröpfte Gesenkteilung vorgesehen, wobei die Gesenkteilung an zumindest einem zum Lagerzapfen benachbarten Abschnitt der Ausgleichswelle zu deren Rotationsachse in Richtung des Massenschwerpunkts versetzt verläuft. Die gekröpfte Gesenkteilung berücksichtigt nicht nur die charakteristische Geometrie der Ausgleichswelle, sondern ermöglicht es auch, das schwächere Werkstoffgefüge im Bereich des inhomogenen Faserverlaufs dem Verlauf der sogenannten neutralen Faser, die auch als Spannungsnulllinie bezeichnet wird, folgen zu lassen.

### Kurze Beschreibung der Zeichnungen

Weitere Merkmale der Erfindung ergeben sich aus der nachfolgenden Beschreibung und aus den Zeichnungen, in denen ein Ausführungsbeispiel der Erfindung dargestellt ist. Es zeigen:
- Figur 1: den Querschnitt I-I einer nach dem erfindungsgemäßen Verfahren geschmiedeten Ausgleichswelle gemäß Figur 3,
- Figur 2: den Querschnitt I-I einer nach bekanntem Verfahren geschmiedeten Ausgleichswelle gemäß Figur 3 und
- Figur 3: die im Stand der Technik an sich bekannte Ausgleichswelle in per- spektivischer Darstellung.

### Ausführliche Beschreibung der Zeichnungen

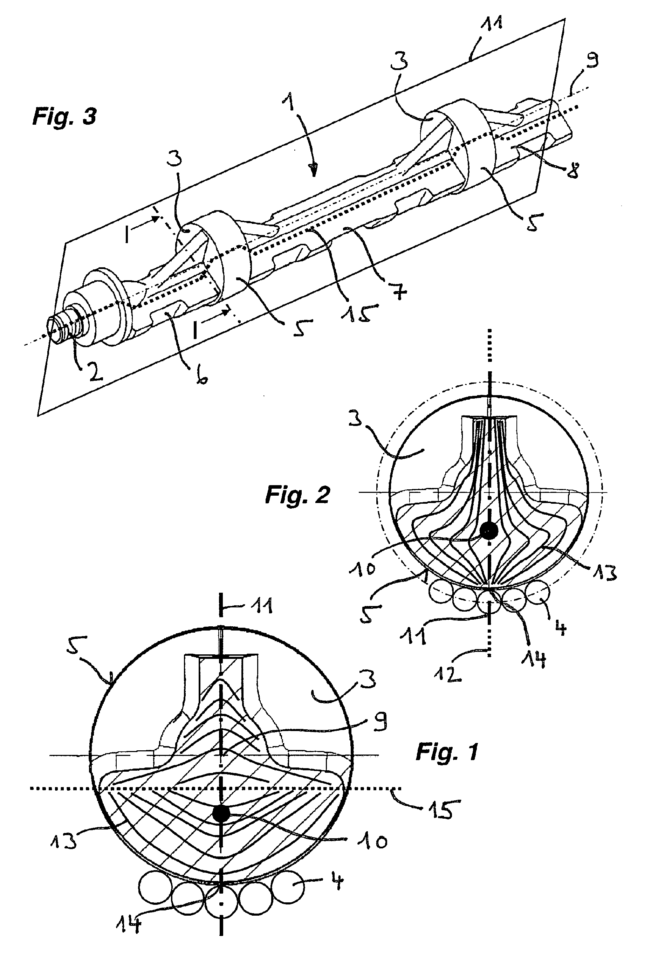

Aus Figur 3 geht eine dem Fachmann an sich bekannte Ausgleichswelle 1 für ein ebenfalls bekanntes und hier nicht dargestelltes Massenausgleichsgetriebe einer Brennkraftmaschine in bereits fertig bearbeitetem Zustand hervor. Das Massenausgleichsgetriebe dient in diesem Fall dem Ausgleich von Massenkräften zweiter Ordnung in einem Mehrzylinderreihenmotor und umfasst zwei der dargestellten Ausgleichswellen 1, die mit doppelter Kurbelwellendrehzahl gegenläufig rotieren. Die Ausgleichswelle 1 wird an einem Antriebsabschnitt 2 beispielsweise über ein Kettenrad oder ein Zahnrad angetrieben und ist an zwei Lagerzapfen 3 in einem Gehäuse der Brennkraftmaschine radial gelagert. Zur Radiallagerung sind zwei hier ebenfalls nicht näher dargestellte Wälzlager vorgesehen, für deren Wälzkörper 4 (s. Figuren 1 oder 2) jeweils die Außenmantelfläche der Lagerzapfen 3 als innere Laufbahn 5 dient. Bei den Wälzlagern handelt es sich bevorzugt um radialen Bauraum sparende Nadelhülsen, die bekanntermaßen aus einem dünnwandigen, spanlos geformten Außenring und einem aus den Nadeln 4 gebildeten Nadelkranz bestehen.

Die Ausgleichswelle 1 weist ferner ihre funktionsbedingt charakteristische Geometrie mit benachbart zu den Lagerzapfen 3 verlaufenden Unwuchtabschnitten 6, 7 und 8 auf, die zu einem gegenüber der Rotationsachse 9 exzentrischen Massenschwerpunkt 10 führen, wie er in den Figuren 1 und 2 eingezeichnet ist. Durch die Rotationsachse 9 und den Massenschwerpunkt 10 wird eine mit 11 bezeichnete Unwuchtebene aufgespannt.

Bei dem in Figur 2 dargestellten Querschnitt I-I durch die gesenkgeschmiedete Ausgleichswelle 1 fällt die durch die Strichpunktlinie symbolisierte Unwuchtebene 11 mit der gepunktet dargestellten Gesenkteilung 12 des Gesenks zusammen. Bei dieser im Stand der Technik üblichen Gesenkteilung 12 nutzt man den zur Unwuchtebene 11 im wesentlichen spiegelsymmetrischen Querschnittsverlauf der Ausgleichswelle 1, um sich eines möglichst einfach herzustellenden Gesenks mit in der Regel ebener Gesenkteilung 12 und symmetrischen Werkzeugkräften in den Gesenkhälften bedienen zu können. Ein erheblicher Nachteil der mit der Unwuchtebene 11 zusammenfallenden Gesenkteilung 12 betrifft jedoch das sich im Schmiedeprozess der Ausgleichswelle 1 einstellende Werkstoffgefüge, das dann einen durch die Linien 13 symbolisierten und sowohl durch die Gesenkteilung 12 als auch durch die Unwuchtebene 11 unterbrochenen Faserverlauf aufweist. Da es sich bei der Radiallagerung der Ausgleichswelle 1 bekanntermaßen um ein Umlaufverhältnis mit Punktlast am Lagerzapfen 3 und Umfangslast an der Gehäuselagerstelle in der Brennkraftmaschine handelt, besteht bei einem derartigen Werkstoffgefüge das erhöhte Risiko, dass es an der höchstbelasteten Stelle 14 des Lagerzapfens 3 zu vorzeitigen Ermüdungsschäden, wie Materialausbrüchen an der Laufbahn 5 für das Wälzlager kommt.

Wie es aus dem Querschnitt I-I in Figur 1 hervorgeht, soll das Schmieden der Ausgleichswelle 1 erfindungsgemäß mit gegenüber der Unwuchtebene 11 verdrehter Gesenkteilung 15 erfolgen. Die Gesenkteilung 15 ist in diesem bevorzugten Ausführungsbeispiel um 90° gegenüber der Unwuchtebene 11 verdreht, so dass sich beim Schmiedeprozess ein bezüglich der Punktlast an der Laufbahn 5 des Lagerzapfens 3 beanspruchungsgerechtes Werkstoffgefüge einstellt. Es ist deutlich erkennbar, dass sich auf diese Weise im Bereich der höchstbelasteten Stelle 14 des Lagerzapfens 3 ein homogener und ununterbrochener Faserverlauf 13 erzielen lässt.

Weiterhin ist der Figur 1 entnehmbar, dass die Gesenkteilung 15 an dem zum Lagerzapfen 3 benachbarten Unwuchtabschnitt 6 gemäß dem Schnitt I-I in Figur 3 zur Rotationsachse 9 in Richtung des Massenschwerpunkts 10 versetzt verläuft. Aus Gründen der Entformbarkeit der Ausgleichswelle 1 aus dem Gesenk ist dabei eine in Richtung der Rotationsachse 9 mehrfach gekröpfte Gesenkteilung 15 des nicht näher dargestellten, vom Fachmann jedoch ohne weiteres herstellbaren Gesenks vorgesehen. Die in Figur 3 durch die gepunktete Linie schematisch dargestellte Gesenkteilung 15 verläuft im Bereich des Antriebsabschnitts 2 und der Lagerzapfen 3 auf Höhe der Rotationsachse 9, und im Bereich der Unwuchtabschnitte 6, 7, und 8 zum Massenschwerpunkt 10 hin versetzt.

### Bezugszahlenliste

- 1: Ausgleichswelle
- 2: Antriebsabschnitt
- 3: Lagerzapfen
- 4: Wälzkörper
- 5: Laufbahn
- 6: Unwuchtabschnitt
- 7: Unwuchtabschnitt
- 8: Unwuchtabschnitt
- 9: Rotationsachse
- 10: Massenschwerpunkt
- 11: Unwuchtebene
- 12: bekannte Gesenkteilung
- 13: Faserverlauf
- 14: höchstbelastete Stelle des Lagerzapfens
- 15: erfindungsgemäße Gesenkteilung

## Patentansprüche

1. Verfahren zur Herstellung einer gesenkgeschmiedeten Ausgleichswelle (1) für ein Massenausgleichsgetriebe einer Brennkraftmaschine, welche Ausgleichswelle (1) eine durch ihre Rotationsachse (9) und einen exzentrischen Massenschwerpunkt (10) aufgespannte Unwuchtebene (11) und zumindest einen Lagerzapfen (3), dessen Außenmantelfläche als Laufbahn (5) für ein die Ausgleichswelle (1) in der Brennkraftmaschine lagerndes Wälzlager dient, aufweist, **dadurch gekennzeichnet, dass** die Ausgleichswelle (1) in einem Gesenk mit einer in Richtung der Rotationsachse (9) verlaufenden und gegenüber der Unwuchtebene (11) verdrehten Gesenkteilung (15) geschmiedet wird.

2. Verfahren nach Anspruch 1, **dadurch gekennzeichnet, dass** die Gesenkteilung (15) im wesentlichen orthogonal zur Unwuchtebene (11) verläuft.

3. Verfahren nach Anspruch 2, **dadurch gekennzeichnet, dass** eine in Richtung der Rotationsachse (9) gekröpfte Gesenkteilung (15) vorgesehen ist, wobei die Gesenkteilung (15) an zumindest einem zum Lagerzapfen (3) benachbarten Abschnitt (6) der Ausgleichswelle (1) zur Rotationsachse (9) in Richtung des Massenschwerpunkts (10) versetzt verläuft.

## Claims

1. Process for producing a drop-forged balancing shaft (1) for a mass-balancing gear mechanism of an internal combustion engine, which balancing shaft (1) comprises an unbalance plane (11) defined by the axis of rotation (9) of the balancing shaft and by an eccentric mass center of gravity (10), and at least one bearing journal (3), the outer lateral surface of which serves as a raceway (5) for a rolling bearing which supports the balancing shaft (1) in the internal combustion engine, **characterized in that** the balancing shaft (1) is forged in a forging die having a parting plane (15) which extends in the direction of the axis of rotation (9) and is rotated in relation to the unbalance plane (11).

2. Process according to Claim 1, **characterized in that** the parting plane (15) extends substantially orthogonally with respect to the unbalance plane (11).

3. Process according to Claim 2, **characterized in that** a parting plane (15) which is cranked in the direction of the axis of rotation (9) is provided, with the parting plane (15) extending in a manner offset with respect to the axis of rotation (9) in the direction of the mass center of gravity (10) on at least a portion (6) of the balancing shaft (1) that is adjacent to the bearing journal (3).

## Revendications

1. Procédé de fabrication d'un arbre d'équilibrage (1) forgé en matrice pour un mécanisme d'équilibrage de masse d'un moteur à combustion interne, lequel arbre d'équilibrage (1) présente un plan de déséquilibre (11) formé par son axe de rotation (9) et un centre de masse (10) excentrique et au moins un tourillon (3), dont la surface d'enveloppe extérieure sert de piste de roulement (5) pour un palier à roulement supportant l'arbre d'équilibrage (1) dans le moteur à combustion interne, **caractérisé en ce que** l'arbre d'équilibrage (1) est forgé dans une matrice avec une division de matrice (15) s'étendant dans la direction de l'axe de rotation (9) et tournée par rapport au plan de déséquilibre (11).

2. Procédé selon la revendication 1, **caractérisé en ce que** la division de matrice (15) s'étend essentiellement perpendiculairement au plan de déséquilibrage (11).

3. Procédé selon la revendication 2, **caractérisé en ce que** l'on prévoit une division de matrice (15) coudée dans la direction de l'axe de rotation (9), la division de matrice (15) s'étendant sur au moins une portion (6) de l'arbre d'équilibrage (1) adjacente au tourillon (3) de manière décalée par rapport à l'axe de rotation (9) dans la direction du centre de masse (10).
